# FASCICULE DE BREVET EUROPEEN

(11) **EP 4 507 931 B1**
(45) Date de publication et mention de la délivrance du brevet: **25.03.2026**
(21) Numéro de dépôt: 23722629.5
(22) Date de dépôt: 12.04.2023
(51) Int. Cl.: B60S 1/34, B60S 1/28, B60S 1/44

(54) **DISPOSITIF D'ESSUIE-VITRE POUR VÉHICULE COMPRENANT UN BALAI PRINCIPAL ET UN BALAI SECONDAIRE**
SCHEIBENWISCHVORRICHTUNG FÜR EIN FAHRZEUG MIT EINEM HAUPT- UND EINEM NEBENBLATT
WINDOW WIPER DEVICE FOR A VEHICLE, COMPRISING A MAIN BLADE AND A SECONDARY BLADE

(30) Priorité: 12.04.2022 FR 2203378
(43) Date de publication de la demande: 19.02.2025
(73) Titulaire: Forges de Belles Ondes, 87200 Saint-Junien (FR)
(72) Inventeur: JEAN, Pascal, 72700 Spay (FR); TERRIS, Damian, 87200 SAINT-JUNIEN (FR)
(74) Mandataire: Ipsilon
(86) Numéro de dépôt international: PCT/FR2023/050526
(87) Numéro de publication internationale: WO 2023/198991

(56) Documents cités:
- ES-A6- 2 013 821
- GB-A- 2 259 851
- US-A- 2 787 018
- US-A- 3 525 115
- US-A- 5 119 524

## Description

### Domaine technique

La présente invention concerne un dispositif d'essuie-vitre pour véhicule comprenant un balai principal et un balai secondaire. Elle concerne plus particulièrement des véhicules dotés de baies vitrées de grande dimension, tels que par exemple des chemins de fer. Ces baies vitrées peuvent par exemple représenter des parebrises de motrices de chemins de fer.

Afin de faciliter la compréhension de l'invention, la dénomination « dispositif d'essuie-vitre » désigne un dispositif assurant à la fois le balayage d'une vitre et l'évacuation de l'eau par au moins un balai.

Les conducteurs de transport en commun ont une responsabilité importante, qui est celle d'acheminer une grande quantité de voyageurs vers au moins une destination donnée. Il est donc fondamental pour ces conducteurs de pouvoir visualiser avec netteté et précision l'environnement de leur véhicule, sous peine de prendre de mauvaises décisions à un instant donné quant à la conduite à adopter pour lesdits véhicules, et qui pourraient engendrer des incidents voire des accidents. Dans le cas d'une baie vitrée étendue telle que par exemple un parebrise, la visibilité pour un conducteur doit donc être de qualité, aussi bien dans une zone centrale et étendue dudit parebrise pour suivre la direction de déplacement du véhicule, que dans une zone périphérique de celui-ci pour notamment lire des panneaux de signalisation. Il en résulte que le dispositif d'essuie-vitre de ces véhicules doit être performant, aussi bien sur la qualité du balayage, que sur la couverture du nettoyage assurée sur la baie vitrée.

Actuellement, une première solution consiste à utiliser un seul bras sur lequel est monté un balai de nettoyage de grande dimension, ledit bras étant monté pivotant autour d'un axe placé dans une zone centrale d'une paroi inférieure bordant par le dessous le parebrise. Ce type de balayage angulaire est performant dans une partie centrale de la baie vitrée, mais demeure inefficace aux différents coins situés autour de cette partie centrale. Durant ce mouvement de pivotement du bras, le balai reste toujours aligné le long du bras sans se déplacer relativement à celui-ci. Si le balai de nettoyage est monté sur le bras en faisant un angle avec celui-ci, cet angle demeure constant durant tous les mouvements de pivotement du bras.

Une deuxième solution consiste à utiliser un bras de type pantographe. Schématiquement, un tel bras possède deux tiges parallèles et de même longueur, comprenant chacune une extrémité inférieure montée en rotation autour d'un axe horizontal d'une paroi inférieure bordant par le dessous le parebrise, et une extrémité supérieure à laquelle est fixée une pièce support. Plus précisément, la pièce support relie les deux extrémités supérieures des deux tiges en étant montée articulée sur chacune desdites extrémités supérieures, ladite pièce support portant un unique balai de nettoyage allongé. Ce balai de nettoyage est arrimé de façon fixe à la pièce support. Lorsque ce type de dispositif d'essuie-vitre est déclenché, les deux tiges pivotent simultanément autour de leurs extrémités inférieures, et le balai de nettoyage coulisse sur la baie vitrée en dessinant une courbe tout en conservant toujours la même orientation dans l'espace, quelle que soit la position des deux tiges. Il est à noter que les deux tiges du bras demeurent parallèles durant tout le mouvement de pivotement dudit bras. Un essuie-vitre comportant un bras de type pantographe, favorise le nettoyage des parties latérales de la baie vitrée, mais ne peut pas assurer le nettoyage d'une zone basse et centrale de ladite baie vitrée.

Une troisième solution consiste à combiner un bras de type pantographe portant un balai de nettoyage principal de grande dimension, et un balai de nettoyage secondaire de plus petite dimension arrimé de façon fixe à l'une des deux tiges du bras de type pantographe. Ce balai de nettoyage secondaire est destiné à nettoyer le parebrise dans une zone basse et centrale de celui-ci. Un risque lié à un tel agencement est de voir le balai de nettoyage principal et le balai de nettoyage secondaire entrer en collision lorsque le bras de type pantographe est en cours de pivotement. Or, une telle collision ne peut avoir lieu car elle risquerait d'aboutir à un blocage du dispositif d'essuie-vitre et éventuellement à une détérioration de ce dispositif. Afin d'empêcher cette collision, le positionnement du balai secondaire est abaissé sur la tige qui le soutient. Or, si une telle configuration empêchait une collision entre les deux balais de nettoyage, elle laisserait subsister une zone de la baie vitrée, celle qui est comprise entre une extrémité supérieure du balai secondaire et une extrémité inférieure du balai de nettoyage principale, dépourvue de tout nettoyage. Une telle situation n'est pas idéale pour la visibilité des conducteurs.

On se rend compte que les différentes solutions d'essuie-vitre proposées actuellement ne sont pas satisfaisantes pour assurer un nettoyage complet d'une baie vitrée étendue, telle que par exemple un parebrise d'une motrice de chemin de fer ou de métro. Le document US 3 525 115 A décrit un dispositif d'essuie-vitre selon l'état de la technique.

Un dispositif d'essuie-vitre selon l'invention est conçu de telle manière qu'il puisse nettoyer efficacement l'intégralité d'une baie vitrée étendue, que ce soit dans une zone centrale et étendue de celle-ci, ou en périphérie de cette zone centrale, ou dans une zone basse et centrale de ladite baie vitrée.

L'invention a pour objet un dispositif d'essuie-vitre comprenant un bras de type pantographe comprenant deux tiges parallèles et de même longueur, chacune des deux tiges comprenant une première extrémité inférieure montée en rotation autour d'un axe de rotation horizontal destiné à être fixé à une paroi inférieure bordant par le dessous une baie vitrée à nettoyer, lesdites deux premières extrémités étant alignées suivant un axe horizontal, lesdites deux tiges comprenant des deuxièmes extrémités supérieures alignées suivant un axe horizontal et reliées entre elles par une pièce support montée articulée sur lesdites deuxièmes extrémités, ladite pièce support portant un balai de nettoyage principal monté de façon fixe sur ladite pièce support.

Selon l'invention le dispositif d'essuie-vitre comprend :
- une première pièce de liaison comprenant un premier segment reliant les deux tiges au moyen de deux premières liaisons pivot, et un deuxième segment incliné prolongeant ledit premier segment,
- une deuxième pièce de liaison comprenant un segment reliant les deux tiges au moyen de deux deuxièmes liaisons pivot, ledit segment comprenant un pion saillant,
- un balai de nettoyage secondaire placé sous le balai de nettoyage principal et monté articulé sur le deuxième segment de la première pièce de liaison, ledit balai de nettoyage secondaire comprenant une rainure dans laquelle est placé le pion saillant du segment de la deuxième pièce de liaison, ledit pion étant susceptible de coulisser dans ladite rainure pour permettre la rotation du balai de nettoyage secondaire lorsque les deux tiges vont pivoter.

Lorsque le dispositif d'essuie-vitre est déclenché, il provoque un mouvement en rotation constitué de plusieurs allers et retours du bras de type pantographe pour que le balai de nettoyage principal, qui est figé dans une position donnée sur ledit bras, puisse nettoyer une zone centrale et étendue de la baie vitrée. Pendant ce mouvement en rotation des deux tiges, constitué de plusieurs allers et retours, le balai de nettoyage secondaire pivote également sous le balai de nettoyage principal en étant décalé par rapport à celui-ci pour assurer le nettoyage d'une zone basse et centrale de la baie vitrée. Le principe d'un dispositif d'essuie-vitre selon l'invention est de mettre en œuvre un balai de nettoyage principal et un balai de nettoyage secondaire placé sous ledit balai de nettoyage principal, sans que lesdits deux balais ne puissent entrer en collision durant le mouvement en rotation de va et vient du bras de type pantographe, et tout en permettant auxdits deux balais de couvrir une zone de nettoyage importante et continue de la baie vitrée. Les deux différentes pièces de liaison utilisées pour la fixation du balai de nettoyage secondaire sur les tiges du bras de type pantographe, ont pour objectif de faire pivoter ledit balai de nettoyage secondaire relativement à ces deux tiges et d'éviter une collision avec le balai de nettoyage principal. De cette manière, lorsque le bras de type pantographe est placé d'un côté de la baie vitrée, le bras secondaire émerge sous les deux tiges du bras de type pantographe. Lorsque le bras de type pantographe pivote vers une position centrale et verticale de la baie vitrée, le balai de nettoyage secondaire a pivoté également dans le même sens, en se repliant progressivement le long des deux tiges du bras de type pantographe pour se retrouver également dans une position verticale. Enfin, lorsque le bras de type pantographe bascule de l'autre côté, le balai de nettoyage pivote dans le même sens que le bras de type pantographe mais en le devançant. L'orientation du balai de nettoyage principal sur le bras de type pantographe reste constante durant le mouvement en rotation constitué de plusieurs allers et retours dudit bras. Avantageusement, le balai de nettoyage principal s'étend verticalement durant ce mouvement en rotation. Préférentiellement, le premier segment et le deuxième segment de la première pièce de liaison, ainsi que le segment de la deuxième pièce de liaison, sont supposés être rectilignes. De façon avantageuse, le pion saillant est placé au centre du segment. Pour résumer le principe de l'invention, le balai de nettoyage principal est monté sur un bras de type pantographe, et le balai de nettoyage secondaire est monté sur ledit bras de type pantographe au moyen d'un dispositif de type pantographe.

Selon une caractéristique possible de l'invention, le balai de nettoyage secondaire est rectiligne et le balai de nettoyage principal est rectiligne, la longueur dudit balai de nettoyage secondaire étant inférieure à celle dudit balai de nettoyage principal. Le balai de nettoyage secondaire vient compléter le balai de nettoyage principal pour assurer un nettoyage en continu sur la quasi-totalité de la surface de la baie vitrée, le terme « en continu » signifiant « sans laisser subsister de zones qui ne seraient nettoyées, ni par le balai de nettoyage principal, ni par le balai de nettoyage secondaire ».

Selon une caractéristique possible de l'invention, la rainure s'étend le long d'un axe longitudinal du balai de nettoyage secondaire sur au moins une partie de la longueur totale dudit balai de nettoyage secondaire. Préférentiellement, la rainure s'étend sur moins de la moitié de la longueur totale du balai de nettoyage secondaire.

Selon une caractéristique possible de l'invention, les deux premières liaisons pivot du premier segment de la première pièce de liaison avec les deux tiges, sont chacune placées à une distance constante de la première extrémité de chacune des deux tiges. Cela signifie que le premier segment de la première pièce de liaison s'étend toujours horizontalement, quel que soit le degré d'inclinaison des deux tiges du bras de type pantographe.

Selon une caractéristique possible de l'invention, les deux deuxièmes liaisons pivot du segment de la deuxième pièce de liaison avec les deux tiges sont chacune placées à une distance constante de la première extrémité de chacune des deux tiges. Cela signifie que segment de la deuxième pièce de liaison s'étend toujours horizontalement, quel que soit le degré d'inclinaison des deux tiges du bras de type pantographe.

Selon une caractéristique possible de l'invention, la distance séparant les deux deuxièmes liaisons pivot et les premières extrémités des deux tiges est inférieure à la distance séparant les deux premières liaisons pivot et lesdites premières extrémités des deux tiges. Cette configuration suggère que la deuxième pièce de liaison est située sous la première pièce de liaison.

Selon une caractéristique possible de l'invention, le deuxième segment de la première pièce de liaison est perpendiculaire au premier segment de ladite première pièce de liaison. Le deuxième segment prolonge le premier segment de façon fixe, c'est-à-dire sans possibilité de mouvement par rapport audit premier segment.

Selon une caractéristique possible de l'invention, le deuxième segment de la première pièce de liaison s'étend verticalement. Cela signifie, que le deuxième segment de la première pièce s'étend verticalement, quel que soit le degré d'inclinaison des deux tiges du bras de type pantographe.

Selon une caractéristique possible de l'invention, le balai de nettoyage secondaire est monté en étant articulé à une extrémité du deuxième segment de la première pièce de liaison.

Selon une caractéristique possible de l'invention, le balai de nettoyage principal est monté de façon fixe sur la pièce support de manière à s'étendre verticalement. Pour une telle position du balai de nettoyage principal, la surface de la baie vitrée qui sera nettoyée par ledit balai principal durant le mouvement en rotation impliquant plusieurs allers et retours, sera la plus grande possible.

L'invention a pour autre objet un ensemble comprenant une façade d'un véhicule comportant une baie vitrée et une paroi inférieure bordant par le dessous ledit baie vitrée.

Selon l'invention, cet ensemble comprend un dispositif d'essuie-vitre comprenant un bras de type pantographe comprenant deux tiges parallèles et de même longueur, chacune des deux tiges comprenant une première extrémité inférieure montée en rotation autour d'un axe de rotation horizontal fixé à la paroi inférieure, lesdites deux premières extrémités étant alignées suivant un axe horizontal, lesdites deux tiges comprenant des deuxièmes extrémités supérieures alignées suivant un axe horizontal et reliées entre elles par une pièce support montée articulée sur lesdites deuxièmes extrémités, ladite pièce support portant un balai de nettoyage principal monté de façon fixe sur ladite pièce support, ledit dispositif comprenant :
- une première pièce de liaison comprenant un premier segment reliant les deux tiges au moyen de deux premières liaisons pivot, et un deuxième segment incliné prolongeant ledit premier segment,
- une deuxième pièce de liaison comprenant un segment reliant les deux tiges au moyen de deux deuxièmes liaisons pivot, ledit segment comprenant un pion saillant,
- un balai de nettoyage secondaire placé sous le balai de nettoyage principal et monté articulé sur le deuxième segment de la première pièce de liaison, ledit balai de nettoyage secondaire comprenant une rainure dans laquelle est placé le pion saillant du segment de la deuxième pièce de liaison, ledit pion étant susceptible de coulisser dans ladite rainure pour permettre la rotation du balai de nettoyage secondaire lorsque les deux tiges vont pivoter.

Un dispositif d'essuie-vitre selon l'invention a pour avantage de permettre un nettoyage complet d'une baie vitrée de grande dimension, grâce à un montage judicieux d'un balai de nettoyage secondaire placé en décalage variable par rapport à un bras de type pantographe supportant un balai de nettoyage principal. En effet, le balai de nettoyage secondaire est monté sur le bras de type pantographe au moyen d'un dispositif de type pantographe, et peut donc se décaler automatiquement par rapport audit bras en fonction de l'angle d'inclinaison de ce bras.

On donne ci-après une description détaillée d'un mode de réalisation préféré d'un essuie-vitre selon l'invention, en se référant aux figures suivantes :
[Fig. 1] La figure 1 est une vue de face d'une façade d'un véhicule et d'un premier mode de réalisation d'un dispositif d'essuie-vitre selon l'état de la technique,
[Fig. 2] La figure 2 est une vue de face d'une façade d'un véhicule et d'un deuxième mode de réalisation d'un dispositif d'essuie-vitre selon l'état de la technique,
[Fig. 3] La figure 3 est une vue de face d'une façade d'un véhicule et d'un troisième mode de réalisation d'un dispositif d'essuie-vitre selon l'état de la technique,
[Fig. 4] La figure 4 est une vue de face d'une zone d'une façade d'un véhicule et d'un dispositif d'essuie-vitre selon l'invention,
[Fig. 5] La figure 5 est une vue de face d'une façade d'un véhicule et du dispositif d'essuie-vitre selon l'invention, dans une première phase de fonctionnement,
[Fig. 6] La figure 6 est une vue de face d'une façade d'un véhicule et du dispositif d'essuie-vitre selon l'invention, dans une deuxième phase de fonctionnement,
[Fig. 7] La figure 7 est une vue de face d'une façade d'un véhicule et du dispositif d'essuie-vitre selon l'invention, dans une troisième phase de fonctionnement,
[Fig. 8] La figure 8 est une vue de face d'une façade d'un véhicule et du dispositif d'essuie-vitre selon l'invention, dans une quatrième phase de fonctionnement,

La description détaillée qui va suivre, concernant les modes de réalisation existants et le mode de réalisation selon l'invention, est effectuée en considérant une façade avant d'une motrice de chemin de fer ou de métro, ladite façade avant comprenant une baie vitrée étendue et une paroi inférieure. On suppose que la paroi inférieure borde par le dessous la baie vitrée, et s'étend dans le même plan que celui de ladite baie vitrée, ledit plan étant sensiblement vertical. De façon générale, le dispositif d'essuie-vitre va assurer un balayage d'une surface extérieure de la baie vitrée, afin de chasser des particules solides ou liquides qui se seraient déposées sur cette baie vitrée, et dans le cas de particules liquides, va également assurer leur évacuation de ladite baie vitrée.

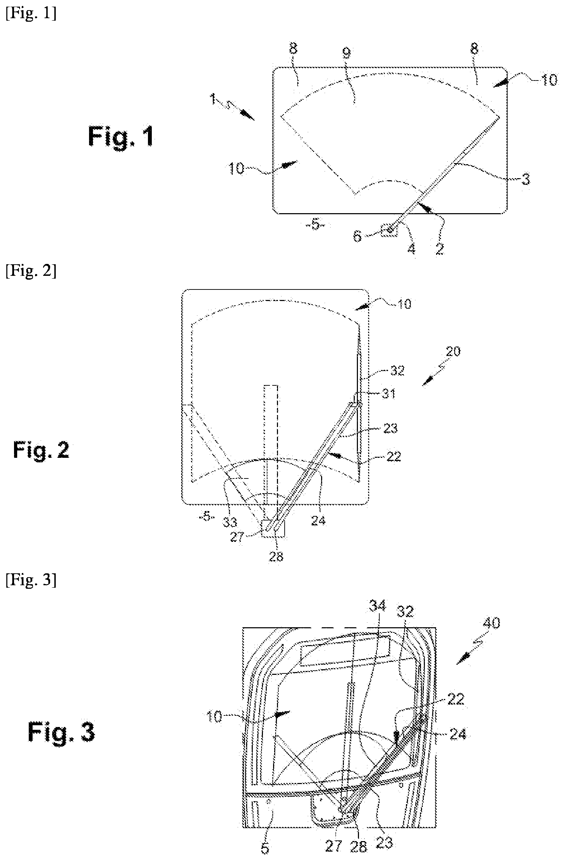

En se référant à la figure 1, un premier mode 1 de réalisation d'un dispositif d'essuie-vitre selon l'état de la technique comprend un bras 2 rectiligne doté d'un balai de nettoyage 3 s'étendant au moins partiellement le long dudit bras. Ce bras 2 comporte une extrémité inférieure 4, montée en rotation autour d'un axe de rotation 6 horizontal, fixé à la paroi inférieure 5 et s'étendant perpendiculairement à ladite paroi inférieure 5, et une extrémité supérieure 7 libre. Sur le mode de réalisation illustré à la figure 1, l'axe de rotation 6 est placé dans une zone centrale de la paroi inférieure 5. Lorsque le dispositif d'essuie-vitre 1 est activé, le bras 2 pivote simplement autour de l'axe de rotation 6 avec une amplitude angulaire prédéfinie. On se rend compte qu'avec un tel dispositif d'essuie-vitre 1, les coins 8 placés autour d'une zone 9 centrale et étendue de la baie vitrée 10 ne sont pas atteints par le balai de nettoyage 3 et ne peuvent donc pas être nettoyés.

En se référant à la figure 2, un deuxième mode 20 de réalisation d'un dispositif d'essuie-vitre selon l'état de la technique comprend un bras 22 de type pantographe, comprenant deux tiges 23, 24 parallèles et de même longueur. Chacune desdites tiges 23, 24 présente une extrémité inférieure montée en rotation autour d'un axe de rotation 27, 28 horizontal, fixé à la paroi inférieure 5 et s'étendant perpendiculairement à ladite paroi inférieure 5. Ces deux axes 27, 28 de rotation sont parallèles et sont alignés le long d'un axe horizontal. Chacune desdites tiges 23, 24 présente une extrémité supérieure, lesdites deux extrémités supérieures étant reliées entre elles par une pièce support 31 montée articulée sur celles-ci. Cette pièce support 31 est dimensionnée de telle sorte que l'écartement entre les deux extrémités supérieures soit égal à l'écartement entre les deux extrémités inférieures. Un balai de nettoyage 32 allongé et rectiligne est monté de façon fixe sur la pièce support 31 en s'étendant suivant un axe vertical. Sur le mode de réalisation illustré à la figure 2, les deux axes de rotation 27, 28 sont placés dans une zone centrale de la paroi inférieure 5. Lorsque le dispositif d'essuie-vitre 20 est activé, les deux tiges 23, 24 du bras 22 pivotent simultanément autour des deux axes de rotations 27, 28 avec une amplitude angulaire prédéfinie. Durant ce mouvement de pivotement, les deux tiges 23, 24 pivotent en demeurant toujours parallèles, et le balai de nettoyage 32 pivote également en dessinant une zone courbe, tout en demeurant vertical. On se rend compte qu'avec un tel dispositif d'essuie-vitre 20, la zone de la baie vitrée 10 qui est nettoyée par le balai de nettoyage 32 est agrandie par rapport à la zone balayée avec le premier mode de réalisation décrit ci-avant. En revanche, en se référant à la figure 2, une zone basse et centrale 33 de la baie vitrée 10 n'est pas nettoyée par le deuxième mode de réalisation 20 d'un dispositif d'essuie-vitre selon l'état de la technique.

En se référant à la figure 3, afin de nettoyer cette zone basse et centrale 33 de la baie vitrée 10, un troisième mode de réalisation 40 d'un dispositif d'essuie-vitre selon l'état de la technique, consiste à reprendre le deuxième mode de réalisation 20 d'un dispositif d'essuie-vitre décrit ci-avant, et de lui adjoindre un balai de nettoyage secondaire 34 plus court que le balai de nettoyage 32 principal monté sur la pièce support 31 reliant les deux tiges 23, 24 du bras 22 de type pantographe. Ce balai de nettoyage secondaire 34 est fixé à l'une des deux tiges 23, 24 du bras 22 de type pantographe, et s'étend le long de la tige 23, 24 sur laquelle il est fixé. Ce balai de nettoyage secondaire 34 n'a aucune possibilité de mouvement par rapport à la tige 23, 24 sur laquelle il est monté, et pivotera donc simultanément avec ladite tige 23, 24. Or, la fixation d'un tel balai de nettoyage secondaire 34 sur l'une des deux tiges 23, 24 du bras 22 de type pantographe, n'est pas idéal pour venir nettoyer une zone basse et centrale 33 de la baie vitrée. En effet,
- soit il est positionné trop bas sur la tige 23, 24 pour éviter une collision avec le balai de nettoyage 32 principal fixé au bout du bras 22, et dans ce cas, il subsistera une zone de la baie vitrée 10 qui ne sera nettoyée ni par le balai de nettoyage principal 32, ni par le balai de nettoyage secondaire 34, ladite zone étant située entre les deux zones qui seront nettoyées par les deux balais de nettoyage 32, 34,
- soit il est positionné trop haut sur la tige 23, 24 et il ne pourra alors pas éviter une collision avec le balai de nettoyage 32 principal fixé au bout du bras 22 de type pantographe.

Il n'est en effet pas idéal de penser que le balai de nettoyage secondaire 34 vienne tangenter l'autre balai de nettoyage 32, en assurant une zone résultante de nettoyage sur la baie vitrée 10, qui soit parfaitement continue.

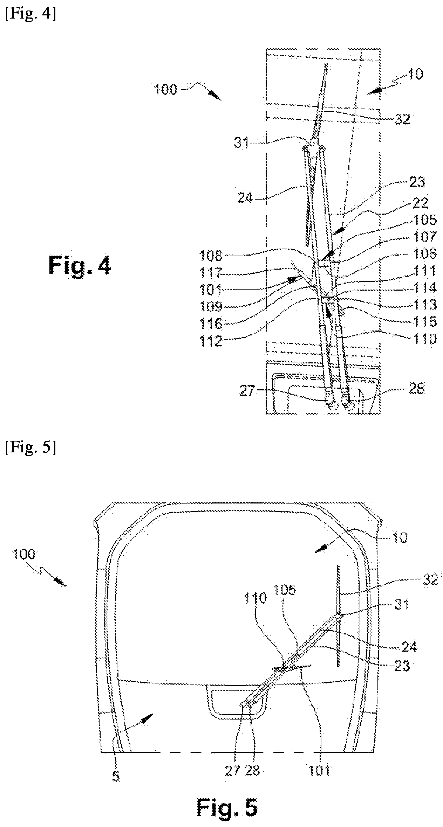

En se référant aux figures 4, 5, 6, 7 et 8, afin d'assurer un nettoyage d'une baie vitrée étendue 10 qui soit le plus complet possible, un dispositif d'essuie-vitre 100 selon l'invention, implique un balai de nettoyage principal 32 et un balai de nettoyage secondaire 101. Le balai de nettoyage principal 32 est destiné à assurer le nettoyage d'une zone principale 102 étendue de la baie vitrée 10, tandis que le balai de nettoyage secondaire 101 est destiné à assurer le nettoyage d'une zone centrale et basse 103 de ladite baie vitrée 10. Le dispositif d'essuie-vitre 100 selon l'invention, se distingue du troisième mode de réalisation 40 d'un dispositif d'essuie-vitre selon l'état de la technique et précédemment décrit, uniquement par le montage du balai de nettoyage secondaire 101. Par conséquent, puisque le montage du balai de nettoyage principal 32 sur un bras 22 de type pantographe est en tout point identique à celui du balai de nettoyage principal 32 dudit troisième mode de réalisation, il ne sera pas à nouveau décrit. Seul le montage du balai de nettoyage secondaire 101 est ici détaillé.

En se référant aux figures 4, 5, 6, 7 et 8, un dispositif d'essuie-vitre 100 selon l'invention, comprend :
- une première pièce de liaison 105 comprenant un premier segment 106 reliant les deux tiges 23, 24 du bras 22 de type pantographe au moyen de deux premières liaisons pivot 107, 108, et un deuxième segment 109 incliné prolongeant ledit premier segment 106. Le deuxième segment 109 est perpendiculaire au premier segment, et les deux premières liaisons pivot 107, 108 sont placées à une distance constante des extrémités inférieures des deux tiges 23, 24. De cette manière, le premier segment 106 s'étend horizontalement et le deuxième segment 109 s'étend verticalement, quel que soit l'angle d'inclinaison desdites deux tiges 23, 24.
- une deuxième pièce de liaison 110 comprenant un segment 111 reliant les deux tiges 23, 24 au moyen de deux deuxièmes liaisons pivot 112, 113, ledit segment 111 comprenant un pion saillant 114. Les deux deuxièmes liaisons pivot 112, 113 sont placées à une distance constante des extrémités inférieures des deux tiges 23, 24, si bien que le segment 111 s'étend toujours horizontalement, quel que soit l'angle d'inclinaison des deux tiges 23, 24. La deuxième pièce de liaison 110 est placée sous la première pièce de liaison 105.

Le balai de nettoyage secondaire 101 est placé sous le balai de nettoyage principal 32, et comprend une rainure 115 s'étendant suivant un axe longitudinal du balai de nettoyage secondaire 101. Préférentiellement, la rainure 115 s'étend sur une distance qui est inférieure à la moitié de la longueur dudit balai de nettoyage secondaire 101. Le balai de nettoyage secondaire 101 est monté de façon articulée à une extrémité libre 116 du deuxième segment 109 de la première pièce de liaison 105, de sorte que le pion saillant 114 du segment 111 de la deuxième pièce de liaison 110 pénètre dans la rainure 115 du balai de nettoyage secondaire 101 et est susceptible de coulisser dans ladite rainure pour permettre une rotation du balai de nettoyage secondaire 101. Le point de fixation du balai de nettoyage secondaire 101 à l'extrémité libre du deuxième segment 109 de la première pièce de liaison 105, est situé dans une zone centrale dudit balai de nettoyage secondaire 101. Ce point de fixation sépare ainsi la rainure 115 et une partie pleine 117 dudit balai de nettoyage secondaire 101.

En se référant à la figure 5, grâce à un tel agencement des deux balais de nettoyage 32, 101 le dispositif d'essuie-vitre 100 va se retrouver dans une première configuration extrême pour laquelle les deux tiges 23, 24 du bras 22 de type pantographe vont être inclinées au maximum d'un côté de la baie vitré 10. Pour cette première configuration, le balai de nettoyage principal 32 qui s'étend verticalement est situé dans une zone d'extrémité latérale de la baie vitrée 10, tandis que le balai de nettoyage secondaire 101 s'étend horizontalement vers ladite zone d'extrémité latérale en émergeant sous lesdites deux tiges 23, 24.

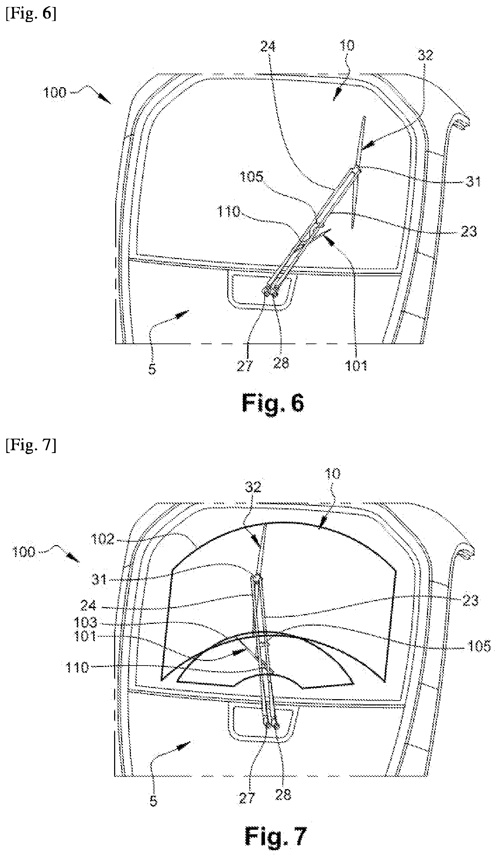

En se référant à la figure 6, lorsque le dispositif d'essuie-vitre 100 est déclenché depuis la première configuration précédente, les deux tiges 23, 24 pivotent autour de leurs extrémités inférieures pour se rapprocher d'une zone centrale de la baie vitrée 10 en s'éloignant de la zone d'extrémité latérale de ladite baie vitrée 10. Le balai de nettoyage principal 32 demeure dans une position verticale tandis que le balai de nettoyage secondaire 101 pivote dans le même sens que les deux tiges 23, 24 en se rapprochant de celles-ci. Autrement dit, le balai de nettoyage secondaire 101 pivote dans le même sens que les deux tiges 23, 24, mais plus rapidement que celles-ci.

En se référant à la figure 7, le bras 22 de type pantographe continue de pivoter dans le même sens en dépassant un axe vertical et central de la baie vitrée 10. Il se retrouve ainsi de l'autre côté de la baie vitrée 10 par rapport à la première configuration. Le balai de nettoyage principal 32 continue donc de pivoter en demeurant vertical, et le balai de nettoyage secondaire 101 pivote également dans le même sens, en étant plus incliné que ne le sont les deux tiges 23, 24 du bras 22 de type pantographe. Autrement dit, le balai de nettoyage secondaire 101 a pivoté de l'autre côté des deux tiges 23, 24 du bras 22 de type pantographe.

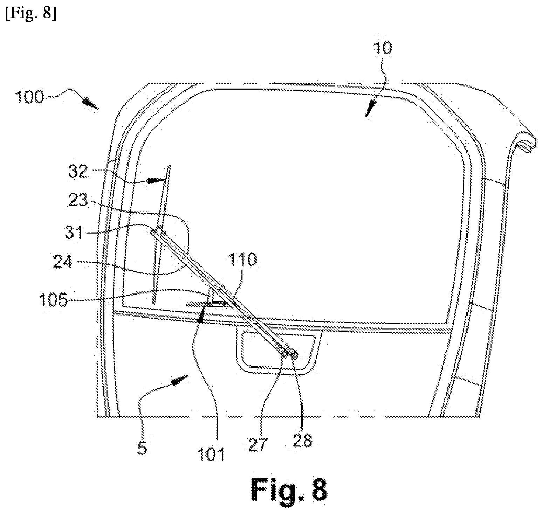

En se référant à la figure 8, le balai de nettoyage principal 32 et le balai de nettoyage secondaire 101 finissent leur course en rotation, pour se retrouver dans une configuration qui est symétrique par rapport à la première configuration illustré à la figure 5.

Ce balayage d'amplitude extrême illustré aux figures 5, 6, 7 et 8 peut être répété plusieurs fois en fonction des besoins rencontrés, par exemple lorsque de la pluie tombe et que le train ou le métro roule en extérieur. Le dispositif d'essuie-vitre 100 effectue ainsi plusieurs allers et retours d'amplitude extrême, sur une période donnée.

Pour résumé, un dispositif d'essuie-vitre 100 selon l'invention permet de pleinement exploiter l'action de nettoyage d'un balai de nettoyage principal 32 et l'action de nettoyage d'un balai de nettoyage secondaire 101, de façon à permettre un nettoyage complet d'une baie vitrée étendue 10. Pour ce faire, le balai de nettoyage secondaire 101 est monté sur le bras 22 de type pantographe portant le balai de nettoyage principal 32, au moyen d'un dispositif lui-même de type pantographe. Grâce à cette astuce de montage du balai de nettoyage secondaire 101 sur le bras 22 de type pantographe portant le balai de nettoyage principal 32, les deux balais 32, 101 nettoient la baie vitrée 10 en étant décalés l'un par rapport à l'autre, sans risque d'entrer en collision et sans laisser subsister une zone de la baie vitrée 10 qui ne serait pas couverte par lesdits deux balais 32, 101 de nettoyage.

En variante de réalisation d'un dispositif d'essuie-vitre 100 selon l'invention :
- le balai de nettoyage 32 principal peut être monté en étant décalé par rapport à une direction verticale,
- Le ratio de la longueur du balai de nettoyage principal 32 sur la longueur du balai de nettoyage secondaire 101 peut être ajusté en fonction des besoins rencontrés,
- les deux axes de rotation 27, 28 des deux tiges 23, 24 du bras 22 de type pantographe peuvent être placés dans une zone de la paroi inférieure 5 qui est décalée latéralement par rapport à une zone centrale,
- la longueur du deuxième segment 109 de la première pièce de liaison 105 peut varier pour adapter l'angle de démarrage du balai secondaire 101,
- un ressort peut être intégré entre le balai secondaire 101 et le deuxième segment 109 de la première pièce de liaison 105 au niveau de l'extrémité libre 116 dudit deuxième segment 109. Ce ressort permet d'assurer un appui du balai secondaire 101 sur la baie vitrée 10 sans lever le bras et par conséquent le balai de nettoyage principal 32.

## Revendications

1. Dispositif d'essuie-vitre (1, 20, 40, 100) comprenant un bras (22) de type pantographe comprenant deux tiges (23, 24) parallèles et de même longueur, chacune des deux tiges (23, 24) comprenant une première extrémité inférieure montée en rotation autour d'un axe de rotation (27, 28) horizontal destiné à être fixé à une paroi (5) inférieure bordant par le dessous une baie vitrée (10) à nettoyer, lesdites deux premières extrémités étant alignées suivant un axe horizontal, lesdites deux tiges (23, 24) comprenant des deuxièmes extrémités supérieures alignées suivant un axe horizontal et reliées entre elles par une pièce support (31) montée articulée sur lesdites deuxièmes extrémités, ladite pièce support (31) portant un balai de nettoyage principal (32) monté de façon fixe sur ladite pièce support (31), **caractérisé en ce qu'**il comprend :
- une première pièce (105) de liaison comprenant un premier segment (106) reliant les deux tiges (23, 24) au moyen de deux premières liaisons pivot (107, 108), et un deuxième segment (109) incliné prolongeant ledit premier segment (106),
- une deuxième pièce (110) de liaison comprenant un segment (111) reliant les deux tiges (23, 24) au moyen de deux deuxièmes liaisons pivot (112, 113), ledit segment (111)comprenant un pion saillant (114),
- un balai de nettoyage secondaire (101) placé sous le balai de nettoyage principal (32) et monté articulé sur le deuxième segment (109) de la première pièce de liaison (105), ledit balai de nettoyage secondaire (101) comprenant une rainure (115) dans laquelle est placé le pion saillant (114) du segment (111) de la deuxième pièce (110) de liaison, ledit pion (114) étant susceptible de coulisser dans ladite rainure (115) pour permettre la rotation du balai de nettoyage secondaire (101) lorsque les deux tiges (23, 24) vont pivoter.

2. Dispositif d'essuie-vitre selon la revendication 1, **caractérisé en ce que** le balai de nettoyage secondaire (101) est rectiligne et le balai de nettoyage principal (32) est rectiligne, et **en ce que** la longueur dudit balai de nettoyage secondaire (101) est inférieure à celle dudit balai de nettoyage principal (32).

3. Dispositif d'essuie-vitre selon la revendication 2, **caractérisé en ce que** la rainure (115) s'étend le long d'un axe longitudinal du balai de nettoyage secondaire (101) sur au moins une partie de la longueur totale dudit balai de nettoyage secondaire (101).

4. Dispositif d'essuie-vitre selon l'une quelconque des revendications 1 à 3, **caractérisé en ce que** les deux premières liaisons pivot (107, 108) du premier segment (106) de la première pièce (105) de liaison avec les deux tiges (23, 24), sont chacune placées à une distance constante de la première extrémité de chacune des deux tiges (23, 24).

5. Dispositif d'essuie-vitre selon l'une quelconque des revendications 1 à 4, **caractérisé en ce que** les deux deuxièmes liaisons pivot (112, 113) du segment (111) de la deuxième pièce (110) de liaison avec les deux tiges (23, 24) sont chacune placées à une distance constante de la première extrémité de chacune des deux tiges (23, 24).

6. Dispositif d'essuie-vitre selon la revendication 5, **caractérisé en ce que** la distance séparant les deux deuxièmes liaisons pivot (112, 113) et les premières extrémités des deux tiges (23, 24) est inférieure à la distance séparant les deux premières liaisons pivot (107, 108) et lesdites premières extrémités des deux tiges (23, 24).

7. Dispositif d'essuie-vitre selon l'une quelconque des revendications 1 à 6, **caractérisé en ce que** le deuxième segment (109) de la première pièce (105) de liaison est perpendiculaire au premier segment (106) de ladite première pièce (105) de liaison.

8. Dispositif d'essuie-vitre selon les revendications 4 et 7, **caractérisé en ce que** le deuxième segment (109) de la première pièce (105) de liaison s'étend verticalement.

9. Dispositif d'essuie-vitre selon les revendications 4, 7 et 8, **caractérisé en ce que** le balai de nettoyage secondaire (101) est monté en étant articulé à une extrémité (116) du deuxième segment (109) de la première pièce (105) de liaison.

10. Dispositif d'essuie-vitre selon l'une quelconque des revendications 1 à 9, **caractérisé en ce que** le balai de nettoyage principal (32) est monté de façon fixe sur la pièce support (31) de manière à s'étendre verticalement.

11. Ensemble comprenant une façade d'un véhicule comportant une baie vitrée (10) et une paroi inférieure (5) bordant par le dessous ladite baie vitrée (10), **caractérisé en ce qu'**il comprend un dispositif d'essuie-vitre (100) selon la revendication 1.

## Patentansprüche

1. Scheibenwischvorrichtung (1, 20, 40, 100), die einen Arm (22) vom Typ Pantograph beinhaltet, der zwei parallele Stangen (23, 24) gleicher Länge beinhaltet, wobei jede der zwei Stangen (23, 24) ein erstes, unteres Ende beinhaltet, das um eine horizontale Drehachse (27, 28) drehbar montiert ist, die dazu bestimmt ist, an einer unteren Wand (5) befestigt zu sein, die ein zu reinigendes Glasfenster (10) von unten einfasst, wobei die zwei ersten Enden entlang einer horizontalen Achse ausgerichtet sind, wobei die zwei Stangen (23, 24) zweite, obere Enden beinhalten, die entlang einer horizontalen Achse ausgerichtet sind und untereinander durch eine Stützteil (31) verbunden sind, das an den zweiten Enden angelenkt ist, wobei das Stützteil (31) ein Hauptreinigungsblatt (32) trägt, das fest an dem Stützteil (31) montiert ist, **dadurch gekennzeichnet, dass** sie Folgendes beinhaltet:
- ein erstes Verbindungsteil (105), das ein erstes Segment (106), das die zwei Stangen (23, 24) mit Hilfe von zwei ersten Schwenkverbindungen (107, 108) verbindet, und ein zweites, abgewinkeltes Segment (109), das das erste Segment (106) verlängert, beinhaltet,
- ein zweites Verbindungsteil (110), das ein Segment (111), das die zwei Stangen (23, 24) mit Hilfe von zwei zweiten Schwenkverbindungen (112, 113) verbindet, beinhaltet, wobei das Segment (111) einen vorstehenden Stift (114) beinhaltet,
- ein Nebenreinigungsblatt (101), das unter dem Hauptreinigungsblatt (32) angeordnet ist und an dem zweiten Segment (109) des ersten Verbindungsteils (105) angelenkt ist, wobei das Nebenreinigungsblatt (101) eine Nut (115) beinhaltet, in der der vorstehende Stift (114) des Segments (111) des zweiten Verbindungsteils (110) angeordnet ist, wobei der Stift (114) in der Nut (115) gleiten kann, um die Drehung des Nebenreinigungsblatts (101) zu gestatten, wenn die zwei Stangen (23, 24) geschwenkt werden.

2. Scheibenwischvorrichtung nach Anspruch 1, **dadurch gekennzeichnet, dass** das Nebenreinigungsblatt (101) geradlinig ist und das Hauptreinigungsblatt (32) geradlinig ist und dass die Länge des Nebenreinigungsblatts (101) kleiner als die des Hauptreinigungsblatts (32) ist.

3. Scheibenwischvorrichtung nach Anspruch 2, **dadurch gekennzeichnet, dass** sich die Nut (115) über mindestens einen Teil der Gesamtlänge des Nebenreinigungsblatts (101) entlang einer Längsachse des Nebenreinigungsblatts (101) erstreckt.

4. Scheibenwischvorrichtung nach einem der Ansprüche 1 bis 3, **dadurch gekennzeichnet, dass** die zwei ersten Schwenkverbindungen (107, 108) des ersten Segments (106) des ersten Verbindungsteils (105) für die zwei Stangen (23, 24) jeweils in einem konstanten Abstand zu dem ersten Ende jeder der zwei Stangen (23, 24) angeordnet sind.

5. Scheibenwischvorrichtung nach einem der Ansprüche 1 bis 4, **dadurch gekennzeichnet, dass** die zwei zweiten Schwenkverbindungen (112, 113) des Segments (111) des zweiten Verbindungsteils (110) für die zwei Stangen (23, 24) jeweils in einem konstanten Abstand zu dem ersten Ende jeder der zwei Stangen (23, 24) angeordnet sind.

6. Scheibenwischvorrichtung nach Anspruch 5, **dadurch gekennzeichnet, dass** der Abstand, der die zwei zweiten Schwenkverbindungen (112, 113) und die ersten Enden der zwei Stangen (23, 24) trennt, kleiner als der Abstand ist, der die zwei ersten Schwenkverbindungen (107, 108) und die ersten Enden der zwei Stangen (23, 24) trennt.

7. Scheibenwischvorrichtung nach einem der Ansprüche 1 bis 6, **dadurch gekennzeichnet, dass** das zweite Segment (109) des ersten Verbindungsteils (105) senkrecht zu dem ersten Segment (106) des ersten Verbindungsteils (105) ist.

8. Scheibenwischvorrichtung nach den Ansprüchen 4 und 7, **dadurch gekennzeichnet, dass** sich das zweite Segment (109) des ersten Verbindungsteils (105) vertikal erstreckt.

9. Scheibenwischvorrichtung nach den Ansprüchen 4, 7 und 8, **dadurch gekennzeichnet, dass** das Nebenreinigungsblatt (101) gelenkig an einem Ende (116) des zweiten Segments (109) des ersten Verbindungsteils (105) montiert ist.

10. Scheibenwischvorrichtung nach einem der Ansprüche 1 bis 9, **dadurch gekennzeichnet, dass** das Hauptreinigungsblatt (32) fest an dem Stützteil (31) montiert ist, sodass es sich vertikal erstreckt.

11. Anordnung, die eine Vorderseite eines Fahrzeugs beinhaltet, die ein Glasfenster (10) und eine untere Wand (5), die das Glasfenster (10) von unten einfasst, umfasst, **dadurch gekennzeichnet, dass** sie eine Scheibenwischvorrichtung (100) nach Anspruch 1 beinhaltet.

## Claims

1. Window wiper device (1, 20, 40, 100) comprising a pantograph-type arm (22) comprising two parallel rods (23, 24) of the same length, each of the two rods (23, 24) comprising a first lower end mounted in rotation about a horizontal axis of rotation (27, 28) intended to be fastened to a lower wall (5) bordering the bottom of a window (10) to be cleaned, said two first ends being aligned along a horizontal axis, said two rods (23, 24) comprising second upper ends aligned along a horizontal axis and connected to one another by a support part (31) mounted in an articulated manner on said second ends, said support part (31) bearing a main wiper blade (32) mounted fixedly on said support part (31), **characterized in that** it comprises:
- a first connecting part (105) comprising a first segment (106) connecting the two rods (23, 24) by means of two first pivot connections (107, 108), and a second inclined segment (109) extending said first segment (106),
- a second connecting part (110) comprising a segment (111) connecting the two rods (23, 24) by means of two second pivot connections (112, 113), said segment (111) comprising a projecting pin (114),
- a secondary wiper blade (101) placed below the main wiper blade (32) and mounted in an articulated manner on the second segment (109) of the first connecting part (105), said secondary wiper blade (101) comprising a groove (115) in which the projecting pin (114) of the segment (111) of the second connecting part (110) is placed, said pin (114) being able to slide in said groove (115) to allow the secondary wiper blade (101) to rotate when the two rods (23, 24) pivot.

2. Window wiper device according to Claim 1, **characterized in that** the secondary wiper blade (101) is rectilinear and the main wiper blade (32) is rectilinear, and **in that** the length of said secondary wiper blade (101) is less than that of said main wiper blade (32).

3. Window wiper device according to Claim 2, **characterized in that** the groove (115) extends along a longitudinal axis of the secondary wiper blade (101) over at least part of the total length of said secondary wiper blade (101).

4. Window wiper device according to any one of Claims 1 to 3, **characterized in that** the two first pivot connections (107, 108) of the first segment (106) of the first connecting part (105) for connection to the two rods (23, 24) are each placed at a constant distance from the first end of each of the two rods (23, 24).

5. Window wiper device according to any one of Claims 1 to 4, **characterized in that** the two second pivot connections (112, 113) of the segment (111) of the second connecting part (110) for connection to the two rods (23, 24) are each placed at a constant distance from the first end of each of the two rods (23, 24).

6. Window wiper device according to Claim 5, **characterized in that** the distance separating the two second pivot connections (112, 113) and the first ends of the two rods (23, 24) is less than the distance separating the two first pivot connections (107, 108) and said first ends of the two rods (23, 24).

7. Window wiper device according to any one of Claims 1 to 6, **characterized in that** the second segment (109) of the first connecting part (105) is perpendicular to the first segment (106) of said first connecting part (105).

8. Window wiper device according to Claims 4 and 7, **characterized in that** the second segment (109) of the first connecting part (105) extends vertically.

9. Window wiper device according to Claims 4, 7 and 8, **characterized in that** the secondary wiper blade (101) is mounted in an articulated manner at one end (116) of the second segment (109) of the first connecting part (105).

10. Window wiper device according to any one of Claims 1 to 9, **characterized in that** the main wiper blade (32) is mounted fixedly on the support part (31) so as to extend vertically.

11. Assembly comprising the front of a vehicle having a window (10) and a lower wall (5) bordering the bottom of said window (10), **characterized in that** it comprises a window wiper device (100) according to Claim 1.
